# EUROPEAN PATENT APPLICATION

(11) **EP 4 703 777 A1**
(43) Date of publication of application: **04.03.2026**
(21) Application number: 24797055.1
(22) Date of filing: 24.04.2024
(51) Int. Cl.: G02B 5/02, F21S 2/00, G02F 1/1335, G02F 1/13357

(54) **LIGHT DIFFUSION SHEET, BACKLIGHT UNIT, LIQUID CRYSTAL DISPLAY DEVICE, AND INFORMATION APPARATUS**

(30) Priority: 28.04.2023 JP 2023074699; 23.04.2024 JP 2024069667
(71) Applicant: KEIWA Incorporated, Tokyo 103-0025 (JP)
(72) Inventor: TAKESUE, Takuya, Tokyo 103-0025 (JP); TSAI, Chengheng, Tokyo 103-0025 (JP); NOZAWA, Mayuko, Tokyo 103-0025 (JP)
(74) Representative: Becker Kurig & Partner Patentanwälte mbB
(86) International application number: PCT/JP2024/016047
(87) International publication number: WO 2024/225309

(57) **Abstract**

A light diffusion sheet capable of improving brightness uniformity is provided. The light diffusion sheet (43) has a plurality of recesses (22) having an inverted substantially polygonal pyramid shape on at least one surface of a main body sheet composed of a resin. A refractive index of at least one layer included in the main body sheet configuring the light diffusion sheet (43) for light having a wavelength of 450 nm is 1.55 or more and 1.7 or less. An absorption rate of the main body sheet configuring the light diffusion sheet (43) for light having the wavelength of 450 nm is 7.0% or less.

## Description

### Technical Field

The present disclosure relates to a light diffusion sheet, a backlight unit, a liquid crystal display device, and an information apparatus.

### Background Art

Liquid crystal display devices are widely used as display devices in various information apparatuses such as smartphones and tablet terminals. As backlights of liquid crystal display devices, direct-type systems in which a light source is deployed on the back surface of a liquid crystal panel are predominantly used.

When adopting a direct-type backlight, a light diffusion sheet is used to erase an image of the light source, such as an LED (Light Emitting Diode), and increase brightness uniformity on the display screen (see PTL 1).

In a thin display for a laptop computer, a tablet terminal, or the like, a sheet in which inverted pyramidal recesses are formed, for example, is used as the light diffusion sheet.

### Citation List

### Patent Literature

PTL 1: Japanese Patent Application Publication No. 2011-129277

### Summary of Invention

### Technical Problem

In a direct-type backlight, the light source is arranged directly beneath the display screen, and therefore, as the display becomes thinner, the distance from the light source to the light diffusion sheet and the thickness of the light diffusion sheet are reduced, making it difficult to sufficiently diffuse light using the light diffusion sheet. As a result, a problem occurs in that brightness uniformity in the display screen deteriorates.

An object of the present disclosure is to provide a light diffusion sheet capable of improving brightness uniformity, as well as a backlight unit, a liquid crystal display device, and an information apparatus using the light diffusion sheet.

### Solution to Problem

In order to achieve the objects described above, a light diffusion sheet according to one aspect of the present disclosure is a light diffusion sheet in which a plurality of recesses having an inverted polygonal pyramid shape are provided on at least one surface of a main body sheet composed of a resin, in which the main body sheet includes at least one layer, a refractive index of the layer configuring the main body sheet for light having a wavelength of 450 nm is 1.55 or more and 1.7 or less, and an absorption rate of the main body sheet for light having the wavelength of 450 nm is 7.0% or less.

According to one aspect of the present disclosure, there is provided a backlight unit that is built into a liquid crystal display device and guides light emitted from a plurality of light sources to a display screen, the backlight unit including the light diffusion sheet according to any one of the above-described aspects of the present disclosure that is disposed between the display screen and the plurality of light sources.

According to one aspect of the present disclosure, there is provided a liquid crystal display device including: the backlight unit according to any one of the above-described aspects of the present disclosure; and a liquid crystal display panel.

According to one aspect of the present disclosure, there is provided an information apparatus including the liquid crystal display device according to one aspect of the present disclosure described above.

### Advantageous Effects of Invention

According to one aspect of the present disclosure, a light diffusion sheet capable of improving brightness uniformity and a backlight unit, a liquid crystal display device, and an information apparatus using this light diffusion sheet can be provided.

### Brief Description of Drawings

[Fig. 1]

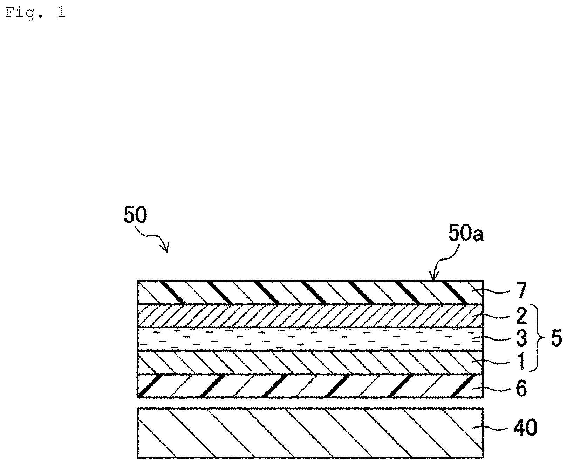

   Fig. 1 is a cross-sectional view of a liquid crystal display device according to an embodiment.
[Fig. 2]

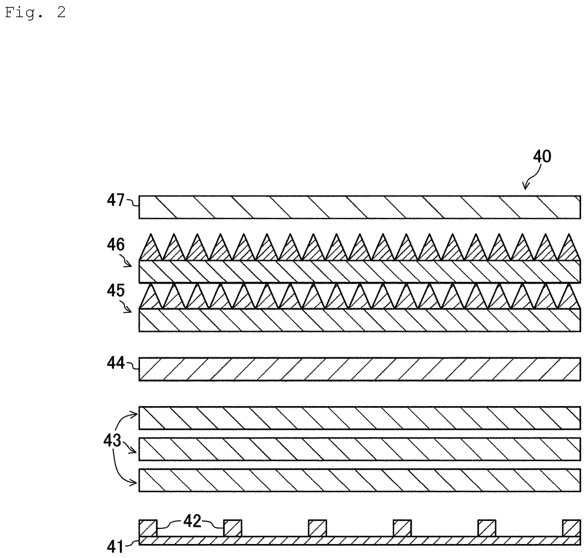

   Fig. 2 is a view showing a first example of a sectional structure of a backlight unit according to the embodiment.
[Fig. 3]

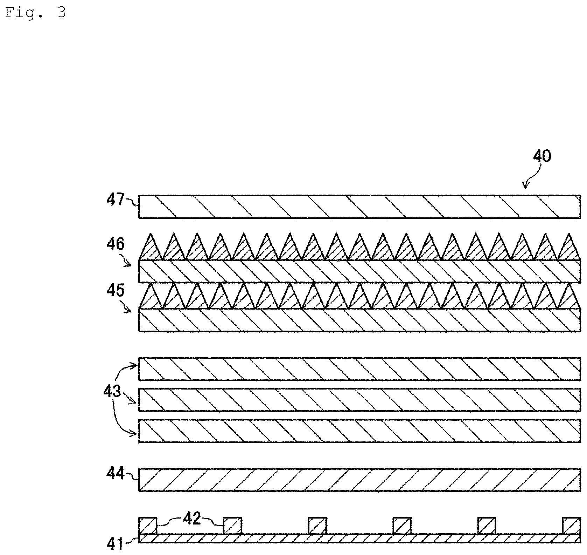

   Fig. 3 is a view showing a second example of the sectional structure of the backlight unit according to the embodiment.
[Fig. 4]

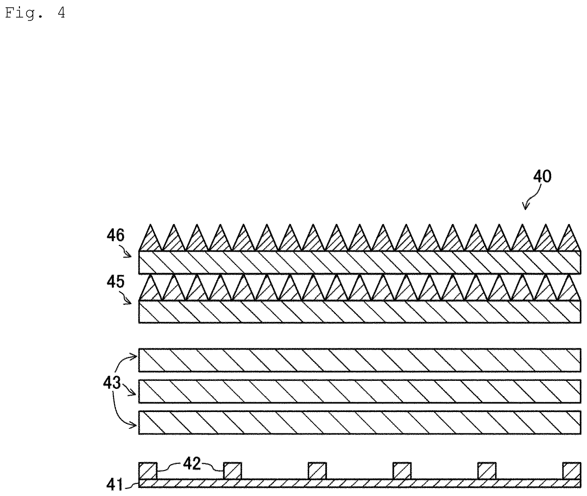

   Fig. 4 is a view showing a third example of the sectional structure of the backlight unit according to the embodiment.
[Fig. 5]

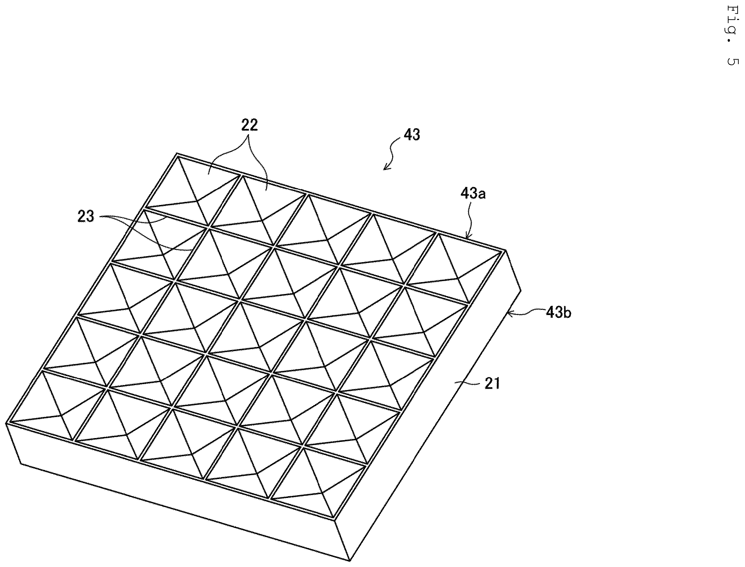

   Fig. 5 is a perspective view of a light diffusion sheet according to the embodiment.
[Fig. 6]

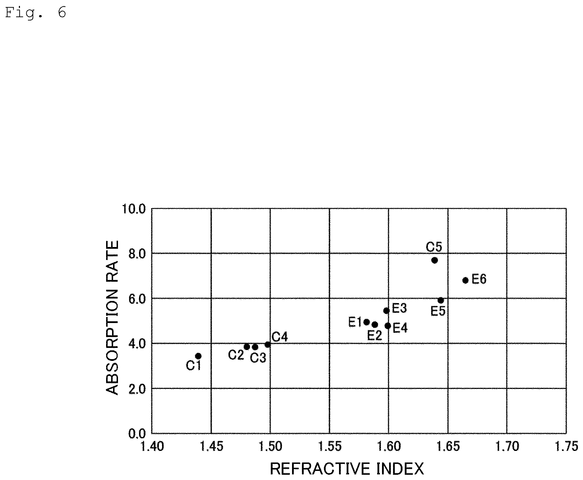

   Fig. 6 is a diagram showing refractive indexes and absorption rates of resins composing light diffusion sheets according to Examples 1 to 6 and Comparative Examples 1 to 6 for light having a wavelength of 450 nm.
[Fig. 7]

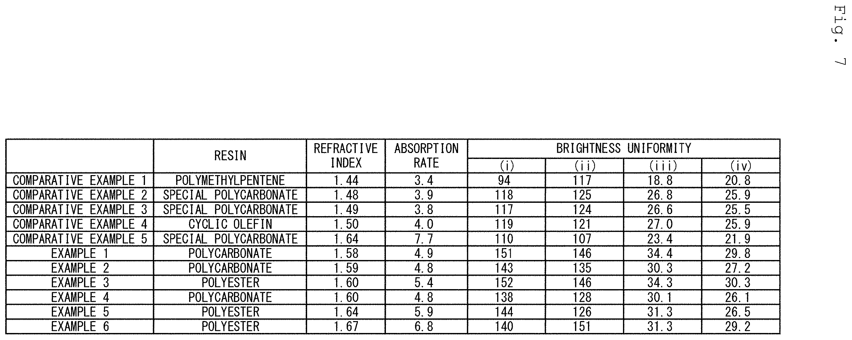

   Fig. 7 is a diagram showing results of evaluations of brightness uniformity for the light diffusion sheets according to Examples 1 to 6 and Comparative Examples 1 to 6.
[Fig. 8]

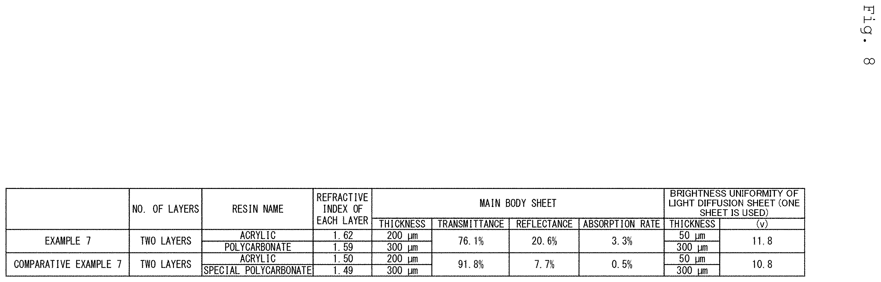

   Fig. 8 is a drawing showing the refractive index of each layer of main body sheets composing light diffusion sheets according to Example 7 and Comparative Example 7, absorption rates of the main body sheets, and results of evaluations of brightness uniformity of the light diffusion sheets.
[Fig. 9]

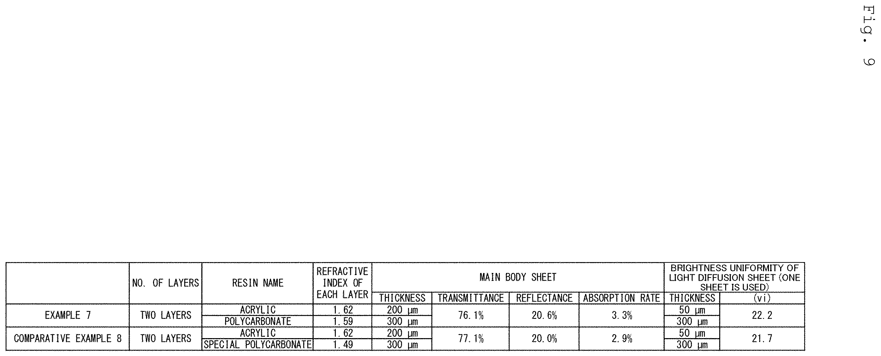

   Fig. 9 is a drawing showing the refractive index of each layer of main body sheets composing light diffusion sheets according to Example 7 and Comparative Example 8, absorption rates of the main body sheets, and results of evaluations of brightness uniformity of the light diffusion sheets.
[Fig. 10]

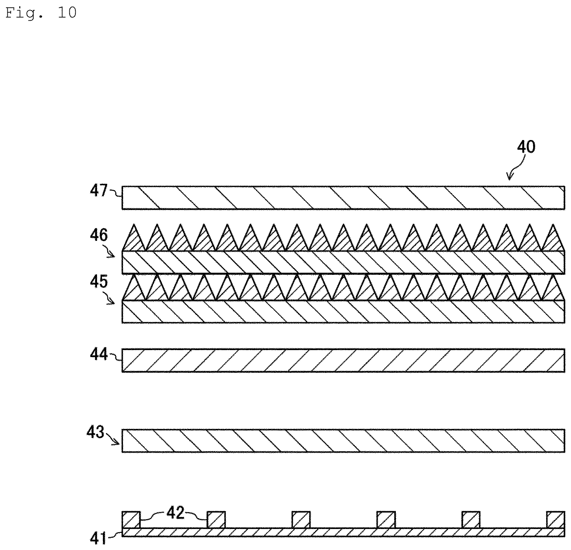

   Fig. 10 is a diagram showing a schematic cross-sectional configuration of a backlight unit employed in comparison between Example 7 and Comparative Example 7.
[Fig. 11]

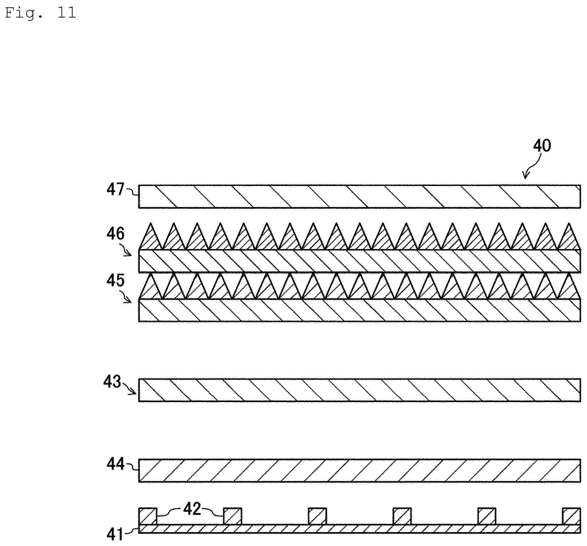

   Fig. 11 is a diagram showing a schematic cross-sectional configuration of a backlight unit employed in comparison between Example 7 and Comparative Example 8.

### Description of Embodiments

Note that in the present disclosure, the "light diffusion sheet" is assumed to include a plate-form "light diffusion plate" and a film-form "light diffusion film".

In the present disclosure, "polymer" means that the molecular weight is 10,000 or more.

In the present disclosure, "the resin does not substantially contain a diffusing agent" means that the "diffusing agent" is not intentionally added to the resin and does not exclude a case in which "an inevitable impurity having a light diffusing property" is mixed into the resin.

### (Embodiment)

A light diffusion sheet, a backlight unit, a liquid crystal display device, and an information apparatus according to an embodiment will be described below with reference to the drawings. It should be noted that the scope of the present disclosure is not limited to the embodiment described below, and any modifications can be made without departing from the scope of the technical ideas of the present disclosure.

### <Liquid Crystal Display Device>

Fig. 1 is an example of a cross-sectional view of a liquid crystal display device according to this embodiment.

As shown in Fig. 1, a liquid crystal display device 50 includes a liquid crystal display panel 5, a first polarizing plate 6 adhered to a bottom surface of the liquid crystal display panel 5, a second polarizing plate 7 adhered to a top surface of the liquid crystal display panel 5, and a backlight unit 40 provided on a back surface side of the liquid crystal display panel 5 via the first polarizing plate 6.

The liquid crystal display panel 5 mainly includes a TFT substrate 1 and a CF substrate 2 provided so as to face each other, and a liquid crystal layer 3 provided between the TFT substrate 1 and the CF substrate 2.

For example, the first polarizing plate 6 and the second polarizing plate 7 include a polarizer layer with a polarizing axis in one direction and a pair of protective layers provided so as to sandwich the polarizer layer.

For example, the TFT substrate 1 includes a plurality of TFTs provided in a matrix pattern on a glass substrate, an interlayer insulating film provided so as to cover the TFTs, a plurality of pixel electrodes provided in a matrix pattern on the interlayer insulating film and respectively connected to the plurality of TFTs, and an alignment film provided so as to cover the pixel electrodes.

For example, the CF substrate 2 includes a black matrix provided in a grid pattern on a glass substrate, a color filter including a red layer, a green layer, and a blue layer respectively provided between the grid cells of the black matrix, a common electrode provided so as to cover the black matrix and the color filter, and an alignment film provided so as to cover the common electrode.

The liquid crystal layer 3 is constituted by a nematic liquid crystal material or the like containing liquid crystal molecules with electro-optic characteristics.

The shape of a display screen 50a of the liquid crystal display device 50 as seen from the front (above in Fig. 1) is generally rectangular or square, but the shape is not limited thereto and may be any desired shape, such as a rectangular shape with rounded corners, an elliptical, circular, or trapezoidal shape, or the shape of an instrument panel for an automobile.

In the liquid crystal display device 50, a voltage of a predetermined magnitude is applied to the liquid crystal layer 3 in each sub-pixel corresponding to each pixel electrode in order to change the alignment state of the liquid crystal layer 3. Thus, the transmittance of light that enters from the backlight unit 40 through the first polarizing plate 6 is adjusted. The light having the adjusted transmittance is emitted through the second polarizing plate 7, whereby an image is displayed.

The liquid crystal display device 50 is used as a display device incorporated into any of various information apparatuses, for example, an in-vehicle device for car navigation or the like, a personal computer, a mobile phone, a portable information terminal, a portable game machine, a copy machine, a ticket vending machine, or an automated teller machine.

### <Backlight Unit>

Fig. 2 shows a first example of a cross-sectional configuration of the backlight unit 40 according to the embodiment. Although Fig. 2 shows the respective components of the backlight unit 40 spaced apart from each other, the respective components may be substantially in contact with each other.

As shown in Fig. 2, the backlight unit 40 includes a reflective sheet 41, a plurality of light sources 42 arranged in a two-dimensional pattern on the reflective sheet 41, a light diffusion sheet 43 provided on an upper side of the plurality of light sources 42, a color conversion sheet 44 provided on an upper side of the light diffusion sheet 43, a first prism sheet 45 and a second prism sheet 46 provided in that order on a side above the color conversion sheet 44, and an upper light diffusion sheet 47 provided on an upper side of the second prism sheet 46.

In the example shown in Fig. 2, although three light diffusion sheets 43 are stacked and provided in the backlight unit 40, one light diffusion sheet 43 may be used, or two or four or more light diffusion sheets may be stacked and used. Eight or less light diffusion sheets 43 may be used, and more preferably, 6 or less light diffusion sheets may be used. The more the number of stacked light diffusion sheets 43, the more the brightness uniformity can be improved, and the less the number of stacked light diffusion sheets 43, the more the thickness of the backlight unit can be reduced.

The reflective sheet 41 is constituted by a white polyethylene terephthalate resin film, a silver vapor-deposited film, or the like, for example.

The type of the light sources 42 is not particularly limited, and for example, LED elements, laser elements, or the like may be used, while from the perspectives of cost, productivity, and so on, LED elements may be used. In the example shown in Fig. 2, blue LED elements are used as the light sources 42. The blue LED elements emit light of x < 0.24, y < 0.18 in terms of the CIE 1931 chromaticity coordinates. The light sources 42 may have a rectangular shape when seen in plan view, and in this case, the length of one side may be 10 µm or more (preferably 50 µm or more) and 10 mm or less (preferably 5 mm or less) and, more preferably, 1 mm or less. In a case in which LED elements are used as the light sources 42, the plurality of LED elements may be deployed on the reflective sheet 41 at fixed intervals. A lens may be mounted on the LED elements constituting the light sources 42 in order to adjust the output angle characteristic of the LED elements. The number of deployed light sources 42 is not particularly limited, but in a case in which the plurality of light sources 42 are deployed in a distributed manner, the light sources 42 are preferably deployed regularly on the reflective sheet 41. Regularly deployed means deployed with a fixed regularity, and for example corresponds to a case in which the light sources 42 are deployed at equal intervals. In a case in which the light sources 42 are deployed at equal intervals, a center-to-center distance between two adjacent light sources 42 may be 0.5 mm or more (preferably, 2 mm or more) and 20 mm or less.

The light diffusion sheet 43 causes light incident from the light source 42 to diffuse and be emitted. A matrix resin composing the light diffusion sheet 43 is a light-transmitting material and is not particularly limited as long as the refractive index for light having a wavelength of 450 nm is 1.55 or more (preferably 1.6 or more) and 1.7 or less, and the absorption rate for light having the wavelength of 450 nm is 7.0% or less.

In more detail, the refractive index of a layer containing the matrix resin composing the light diffusion sheet 43 for light having a wavelength of 450 nm is preferably 1.70 or less, more preferably 1.68 or less, and furthermore preferably 1.65 or less. By configuring as such, the matrix resin can be more easily formed as a sheet, and the re-reflection of light is reduced, which leads to the improvement of brightness. In addition, the refractive index of the layer containing the matrix resin composing the light diffusion sheet 43 for light having the wavelength of 450 nm is preferably 1.55 or more, more preferably 1.58 or more, and furthermore preferably 1.60 or more. By configuring as such, the tendency of causing light to diffuse becomes strong, which leads to the improvement of brightness uniformity.

The absorption rate of the main body sheet having the layer containing the matrix resin composing the light diffusion sheet 43 for light having the wavelength of 450 nm is preferably 7.0% or less, more preferably 6.8% or less, and furthermore preferably 6.0% or less. By configuring as such, it becomes more difficult for light to be absorbed, which leads to the improvement of brightness and/or brightness uniformity. In addition, the absorption rate of the main body sheet having the layer containing the matrix resin composing the light diffusion sheet 43 for light having the wavelength of 450 nm is preferably 0% or more, more preferably 2.0% or more, and furthermore preferably 4.0% or less. By configuring as such, it becomes easy to use an appropriate resin material corresponding to the use of the light diffusion sheet 43.

As a combination of the refractive index of the layer containing the matrix resin composing the light diffusion sheet 43 for light having the wavelength of 450 nm and the absorption rate of the main body sheet for light having the wavelength of 450 nm, it is preferable that the refractive index should be 1.55 or more and 1.70 or less and the absorption rate should be 7.0% or less, and it is more preferable that the refractive index should be 1.58 or more and 1.68 or less, and the absorption rate should be 6.8% or less. By configuring as such, it becomes more difficult to absorb light, which leads to the improvement of brightness and/or brightness uniformity. In addition, as a combination of the refractive index of the layer containing the matrix resin composing the light diffusion sheet 43 for light having the wavelength of 450 nm and the absorption rate of the main body sheet for light having the wavelength of 450 nm, it is more preferable that the refractive index should be 1.60 or more and 1.68 or less and the absorption rate should be 6.8% or less, and it is furthermore preferable that the refractive index should be 1.60 or more and 1.65 or less, and the absorption rate should be 6.0% or less. By configuring as such, the tendency to cause light to diffuse becomes strong, which leads to the improvement of brightness uniformity.

The matrix resin composing the light diffusion sheet 43, for example, may be a polymer resin having an aromatic ring (more specifically, having a molecular weight of 10,000 or more). Alternatively, the matrix resin composing the light diffusion sheet 43, for example, may be any one of a polyester, a polycarbonate (PC), polyphenylsulfone (PPSU), polyethersulfone (PESU), polysulfone (PSU), polyphenylene sulfide (PPS), polyimide (PI), and acrylic. The matrix resin has an aromatic ring or sulfur to increase the refractive index, and it is possible to configure the refractive index for light having the wavelength of 450 nm to be 1.55 or more and, more preferably, 1.6 or more. Here, the acrylic may be an Ultraviolet-curing acrylic resin.

The thickness of the light diffusion sheet 43 is not particularly limited and, for example, may be 50 µm or more and 3 mm or less. When the thickness of the light diffusion sheet 43 exceeds 3 mm, it becomes difficult to achieve reduction of the thickness of a liquid crystal display, and when the thickness of the light diffusion sheet 43 is below 50 µm, it becomes difficult to acquire a sufficient light diffusion effect. As illustrated in Fig. 2, in a case in which multiple light diffusion sheets 43 are stacked, a total thickness of the stacked sheets may be about several hundreds of µm to several mm. The light diffusion sheet 43 may have a film shape or a plate (board) shape. The configuration of the light diffusion sheet 43 and a manufacturing method therefor will be described in detail later.

The color conversion sheet 44 is a wavelength conversion sheet for converting the light (in the example shown in Fig. 2, blue light) from the light sources 42 into light having a wavelength of a desired color (for example, green or red) as a peak wavelength. For example, the color conversion sheet 44 converts blue light with a wavelength of 450 nm into green light with a wavelength of 540 nm and red light with a wavelength of 650 nm. In this case, when light sources 42 that emit blue light with a wavelength of 450 nm are used, the blue light is partially converted into green light and red light by the color conversion sheet 44, and therefore the light that passes through the color conversion sheet 44 becomes white light. A QD (quantum dot) sheet, a fluorescent sheet, or the like, for example, may be used as the color conversion sheet 44.

The first prism sheet 45 and second prism sheet 46 are brightness enhancement sheets that refract light rays entering from the color conversion sheet 44 to a normal direction side. For example, a plurality of grooves with an isosceles triangular cross-section are provided adjacent to each other on a light emission surface side of each of the prism sheets 45, 46, and prisms are formed by triangular prism parts sandwiched between pairs of adjacent grooves. The apex angle of the prism is around 90°, for example. The grooves formed in the first prism sheet 45 and the grooves formed in the second prism sheet 46 may be arranged alternately. Thus, light rays entering from the color conversion sheet 44 can be refracted to the normal direction side by the first prism sheet 45, and light rays emitted from the first prism sheet 45 can be further refracted by the second prism sheet 46 so as to advance substantially perpendicular to the light incidence surface of the upper light diffusion sheet 47. The prism sheets 45, 46 may be stacked as separate bodies or formed integrally. The total thickness of the prism sheets 45, 46 may be around 100 to 400 µm, for example. For example, polyethylene terephthalate (PET) films given a prism shape using an Ultraviolet-curing acrylic resin may be used as the prism sheets 45, 46.

It should be noted that one prism sheet may be used as a brightness enhancement sheet instead of the two prism sheets 45 and 46. Alternatively, another type of optical sheet that can increase the brightness of the light emitted from the light sources 42 may be used.

The upper light diffusion sheet 47 slightly diffuses light rays entering from the second prism sheet 46 side so as to suppress brightness unevenness caused by the shape of the prism portions of the prism sheets 45 and 46 and so on. The upper light diffusion sheet 47 may be directly stacked on the front surface of the second prism sheet 46. The thickness of the upper light diffusion sheet 47 is not particularly limited, but may be, for example, 50 µm or more and 3 mm or less. When the thickness of the upper light diffusion sheet 47 exceeds 3 mm, it becomes difficult to achieve a thin liquid crystal display, whereas when the thickness of the upper light diffusion sheet 47 falls below 50 µm, it becomes difficult to obtain a sufficient light diffusion effect. The upper light diffusion sheet 47 may be in the form of a film or a plate. The upper light diffusion sheet 47 may be configured to include a base material layer and a light diffusion layer that is stacked on the light emission surface of the base material layer and has a resin matrix and beads. Alternatively, as the upper light diffusion sheet 47, for example, a sheet acquired by coating beads with a thermosetting resin on at least one face of a PET film or a sheet with an uneven shape formed using an Ultraviolet-curing acrylic resin may be used.

### <Modification of Backlight Unit>

In the example configuration of the backlight unit 40 shown in Fig. 2, the color conversion sheet 44 is provided on the upper side of the light diffusion sheet 43, or more specifically between the uppermost layer of the light diffusion sheet 43 and the first prism sheet 45. Instead, as shown in Fig. 3, the color conversion sheet 44 may be provided on a lower side of the light diffusion sheet 43, or more specifically between the lowermost layer of the light diffusion sheet 43 and the plurality of light sources 42.

Furthermore, in the example configuration of the backlight unit 40 shown in Fig. 2 or 3, blue light sources are used as the light sources 42, and the color conversion sheet 44 is used. Instead, as shown in Fig. 4, a configuration in which white light sources are used as the light sources 42 and a color conversion sheet is not disposed may be employed. In this case, as in the example shown in Fig. 4, the upper light diffusion sheet 47 may not be disposed. The white light source is constituted by an LED element with a peak wavelength in the blue region, an LED element with a peak wavelength in the green region, and an LED element with a peak wavelength in the red region, and may emit light of 0.24 < x < 0.42, 0.18 < y < 0.48, for example, in terms of the CIE1931 chromaticity coordinates.

### <Light diffusion Sheet>

Fig. 5 is an example perspective view of the light diffusion sheet 43 according to the embodiment.

As shown in Fig. 5, the light diffusion sheet 43 has a first surface 43a that serves as one of a light emission surface and a light incidence surface and a second surface 43b that serves as the other of the light emission surface and the light incidence surface. A plurality of recesses 22 having an inverted substantially polygonal pyramid shape, for example, an inverted substantially square pyramid shape (inverted pyramid shape) are provided in the first surface 43a. In this example, although the second surface 43b is a matte surface, it may be a flat surface instead of this. Alternatively, also in the second surface 43b, for example, a plurality of recesses having an inverted substantially polygonal pyramid shape such as an inverted substantially square pyramid shape (inverted pyramid shape), a substantially prism shape (substantially parallel prism shape), or the like may be provided. When a plurality of sheets are used as the light diffusion sheet 43, a sheet on which the first surface 43a serves as the light emission surface and a sheet on which the first surface 43a serves as the light incidence surface may coexist, and a plurality of types of sheets on which the dimensions, shapes, and array pitches of the recesses 22 and the surface shapes of the second surface 43b differ from each other may be used.

The plurality of recesses 22 may be arranged in a two-dimensional matrix pattern on the first surface 43a. In other words, the plurality of recesses 22 may be arranged along two mutually orthogonal directions. Adjacent recesses 22 are partitioned by ridgelines 23. The ridgelines 23 extend along the two directions in which the recesses 22 are arranged. The array pitch of the recesses 22 may be around 50 µm or more and around 500 µm or less, for example. The deepest portion of the recess 22 is in the center (the vertex of the inverted pyramid) of the recess 22. An angle formed by a wall surface (the inclined surface of the inverted substantially square pyramid) of the recess 22 and a sheet surface (an imaginary mirror surface when the recess 22 is absent) of the light diffusion sheet 43 may be 40 degrees or more and 65 degrees or less, for example, and is preferably 45 degrees or more and 60 degrees or less. In other words, the apex angle of the recess 22 may be, for example, 50 degrees or more and 100 degrees or less, and preferably 60 degrees or more and 90 degrees or less.

In the example illustrated in Fig. 5, for simplification, although a view in which recesses 22 are arranged in a 5×5 matrix form is illustrated, the actual number of arranged recesses 22 is significantly larger. In the two-dimensional arrangement of a plurality of recesses 22, the recesses 22 may be disposed without any gap on the first surface 21a or may be disposed with a predetermined gap interposed therebetween. In addition, some recesses 22 may be randomly arranged in a degree not causing a light diffusion effect to be damaged. The recesses 22 may have other inverted substantially polygonal pyramid shapes different from the inverted substantially square pyramid shape. For example, the "inverted polygonal pyramid" shape of the recesses 22 may be an inverted triangular pyramid or an inverted hexagonal pyramid that can be two-dimensionally arranged without any gap similar to the inverted square pyramid. In a case in which the "inverted polygonal pyramid" shape of the recesses 22 is an inverted square pyramid, it becomes easy to improve the precision of the surface cutting operation of a mold (metal roll) used in a manufacturing process such as extrusion molding or injection molding at the time of forming the recesses 22.

In the present disclosure, while the expressions "inverted substantially polygonal pyramid" and "inverted substantially square pyramid" are used in consideration of the fact that it is difficult to form recesses of a geometrically-strict inverted polygonal pyramid and a geometrically-strict inverted square pyramid with ordinary shape transfer techniques, it is needless to say that the expressions include a true inverted polygonal pyramid, a true inverted square pyramid, and shapes that are substantially an inverted polygonal pyramid and an inverted square pyramid. In other words, "substantially" means "can be approximated", and for example, an "inverted substantially polygonal pyramid" or an "inverted substantially square pyramid" refers to a shape that can be approximated to an inverted polygonal pyramid or an inverted square pyramid. Furthermore, shapes deformed from an "inverted square pyramid" within a range of inevitable shape variability due to machining accuracy during industrial production are also included in an "inverted substantially square pyramid".

The light diffusion sheet 43 is formed to process the plurality of recesses 22 described above in a base material layer 21 that is a main body sheet composed of a resin. For the convenience, the main body sheet is a sheet before formation of the plurality of recesses 22 and thus is distinguished from the light diffusion sheet 43. The main body sheet needs to be capable of transmitting light and includes at least one layer of a thermoplastic resin formed using a thermoplastic resin that is thermoformable as its main component among a transparent (for example, colorless and transparent) synthetic resin, and it is preferable that this layer is composed of a single resin. Alternatively, the main body sheet may include at least one ultraviolet-curing resin layer formed using an ultraviolet-curing resin as its main component.

The main body sheet may be either a single-layer sheet or a multi-layer sheet, in other words, the base material layer 21 has a single-layer configuration or a multi-layer configuration. The thermoplastic resin contained as the main component in at least one layer of the main body sheet is not particularly limited as long as the refractive index for light having the wavelength of 450 nm is 1.55 or more (preferably 1.6 or more) and 1.7 or less, and the absorption rate for light having the wavelength of 450 nm is 7.0% or less. The thermoplastic resin or the ultraviolet-curing resin, which is the main component of the main body sheet, may be, for example, a polymer resin having an aromatic ring (more specifically, having a molecular weight of 10,000 or more). Alternatively, the thermoplastic resin or the ultraviolet-curing resin, for example, may be any one of polyesters, polycarbonate (PC), polyphenylsulfone (PPSU), polyethersulfone (PESU), polysulfone (PSU), polyphenylene sulfide (PPS), polyimide (PI), and acrylic and may be a polymer (more specifically, having a molecular weight of 10,000 or more) resin in which such a thermoplastic resin has an aromatic ring. In accordance with the resin serving as the main component of the base material layer 21 having an aromatic ring or sulfur, the refractive index is increased, and the refractive index for light having the wavelength of 450 nm can be configured to be 1.55 or more, more preferably, 1.6 or more. Note that the term "main component" refers to the component having the highest content, for example, a component having a content of 50% by mass or more.

In a case in which the main body sheet is a multi-layer sheet, the layer composed of at least one resin may be a layer containing the thermoplastic resin described above. In a case in which the main body sheet is a multi-layer sheet, the main body sheet may have at least one layer composed of a thermoplastic resin, and may have a plurality of layers containing different types of thermoplastic resins. In addition, in a case in which the main body sheet is a multi-layer main body sheet, a layer of a curable resin formed by curing a curable resin may be included as a layer other than the layer containing the thermoplastic resin.

The main body sheet is either a single layer or a multi-layer sheet, and the refractive index of at least one layer of the main body sheet that is composed of a resin for light having the wavelength of 450 nm and the absorption rate of the main body sheet for light having the wavelength of 450 nm may be defined through measurement using the main body sheet molded into a predetermined thickness. Details of these methods of measuring the refractive index for light having the wavelength of 450 nm and the absorption rate for light having the wavelength of 450 nm are described in examples. Here, the refractive index for light having the wavelength of 450 nm and the absorption rate for light having the wavelength of 450 nm that have been measured in the single-layer main body sheet can be defined as the refractive index of the layer containing the resin forming the main body sheet and the absorption rate of the main body sheet for light having the wavelength of 450 nm.

In a case in which a multi-layer main body sheet includes a layer of a curable resin, an example of the curable resin includes a layer acquired by curing an Ultraviolet-curing acrylic resin or an Ultraviolet-curing epoxy resin. The curable resin is a resin having a radical or cation-polymerizable functional group, and it is needless to mention that it is a curable resin that is cured by containing a polymerization initiator that generates radicals or cations through absorption of ultraviolet rays.

Each layer constituting the main body sheet, which is the base material layer 21, may contain a diffusing agent and other additives, for example, such as inorganic particles like silica, titanium oxide, aluminum hydroxide, or barium sulfate or organic particles such as acrylic, acrylonitrile, silicone, polystyrene, or polyamide. In order to reduce the manufacturing cost of the light diffusion sheet 43, it is preferable that the base material layer 21 does not contain any diffusing agents or other additives except for inevitable impurities.

The light diffusion sheet 43 may have a single-layer structure constituted by the base material layer 21, or may have a structure of two or more layers including a layer on which the recesses 22 are formed. The method of manufacturing the light diffusion sheet 43 is not particularly limited, but for example, an extrusion molding method, an injection molding method, or the like may be used.

Procedures for manufacturing a single-layer light diffusion sheet with an uneven shape on a surface thereof using an extrusion molding method are as follows. First, pellet-shaped plastic particles (to which a diffusing agent may be added) are fed into a single-screw extruder and melted and kneaded while applying heat. Subsequently, after sandwiching molten resin extruded by T-dies between two metal rolls and cooling the molten resin, a light diffusion sheet is fabricated by conveying the resin using a guide roll and cutting the resin into flat sheets with a sheet cutter. In this case, since sandwiching the molten resin using metal rolls with surfaces having an inverted shape of the desired uneven shape causes the inverted shape on the roll surfaces to be transferred to the resin, the desired uneven shape can be formed on the surface of the light diffusion sheet. In addition, since the shape transferred to the resin does not necessarily represent a 100% transfer of the shape of the roll surfaces, the shape of the roll surfaces may be designed backward from a degree of transfer.

When manufacturing a light diffusion sheet with a two-layer structure having an uneven shape on a surface thereof using an extrusion molding method, for example, after feeding pellet-shaped plastic particles necessary for forming each layer into each of two single-screw extruders, procedures similar to those used for a single-layer light diffusion sheet, described above, may be executed on each layer, whereupon the respective fabricated sheets may be stacked. Alternatively, a light diffusion sheet with a two-layer structure having an uneven shape on a surface thereof may be fabricated as described below. First, pellet-shaped plastic particles necessary for forming each layer are fed into each of two single-screw extruders and melted and kneaded while applying heat. Subsequently, the molten resin to form each layer is fed into one T-die and is stacked inside this T-die, and a stacked molten resin extruded by this T-dice is cooled with being interposed between two metal rolls. Subsequently, a diffusion sheet with a two-layer structure having an uneven shape on a surface thereof may be fabricated by conveying the stacked molten resin using a guide roll and cutting the resin into flat sheets with a sheet cutter.

In addition, the light diffusion sheet 43 may be manufactured as described below by shape transfer using UV (ultraviolet light). First, a roll having an inverted shape of the uneven shape to be transferred is filled with compositions of a curable resin such as an uncured ultraviolet-curing resin, and a base material is pressed to this resin. Next, ultraviolet light is emitted in order to cure the ultraviolet-curing resin in a state where the roll filled with the ultraviolet-curing resin and the base material are integrated. Next, a sheet to which the uneven shape has been shape-transferred by the resin is separated from the roll. Finally, the sheet is once again irradiated with ultraviolet light to completely cure the resin, whereby a light diffusion sheet with an uneven shape on a surface thereof is fabricated.

### <Features of Embodiment>

According to the light diffusion sheet 43 according to this embodiment described above, since the plurality of recesses 22 having inverted substantially polygonal pyramid shapes are included on at least one surface, light can be caused to uniformly diffuse by the plurality of recesses 22. As a main body sheet constituting the base material layer 21 of the light diffusion sheet 43, a main body sheet of which the refractive index for light having the wavelength of 450 nm is 1.55 or more and 1.7 or less and the absorption rate for light having the wavelength of 450 nm is 7.0% or less is used. For this reason, compared to a case in which a resin of which the refractive index for light having the wavelength of 450 nm is less than 1.55 or more than 1.7 or the absorption rate for light having the wavelength of 450 nm is over 7.0% is used, the brightness uniformity can be configured to be high.

In the light diffusion sheet 43 according to this embodiment, if the refractive index of the main body sheet for light having the wavelength of 450 nm is 1.6 or more, the brightness uniformity can be further improved. Further, if at least one layer of the thermoplastic resin included in the main body sheet is a layer of a polymer resin having an aromatic ring, it can be easily set that the refractive index for light having the wavelength of 450 nm is 1.55 or more and 1.7 or less, and the absorption rate for light having the wavelength of 450 nm is 7.0% or less. Alternatively, if the thermoplastic resin included in the main body sheet is any one of polyester, polycarbonate (PC), polyphenylsulfone (PPSU), polyethersulfone (PESU), polysulfone (PSU), polyphenylene sulfide (PPS), polyimide (PI), and acrylic, it can be easily set that the refractive index for light having the wavelength of 450 nm is 1.55 or more and 1.7 or less, and the absorption rate for light having the wavelength of 450 nm is 7.0% or less.

In the light diffusion sheet 43 according to this embodiment, if the resin constituting the base material layer 21 does not substantially contain a diffusing agent, the manufacturing cost of the light diffusion sheet can be reduced.

In the light diffusion sheet 43 according to this embodiment, if the plurality of recesses 22 are formed in an inverted substantially square pyramid shape and arranged in a two-dimensional matrix pattern, the light diffusion sheet 43 can be easily manufactured.

The backlight unit 40 according to this embodiment is built into the liquid crystal display device 50 for guiding the light emitted from the plurality of light sources 42 toward the display screen 50a. Since the backlight unit 40 includes the light diffusion sheet 43 according to this embodiment between the display screen 50a and a plurality of light sources 42, the brightness uniformity can be improved even when the thickness of the liquid crystal display device 50 is further reduced.

In the backlight unit 40 according to this embodiment, if the plurality of light sources 42 are blue light sources, compared to a case in which white light sources are used, the manufacturing cost of the backlight unit 40 can be reduced. Further, if the plurality of light sources 42 are arranged in a two-dimensional matrix pattern at a pitch of 3 mm or less, the brightness uniformity can be further improved. In addition, if the plurality of light sources 42 are disposed on a reflective sheet 41 disposed on a side opposite to the display screen 50a when seen from the light diffusion sheet 43, light is caused to further diffuse in accordance with multiple reflection between the light diffusion sheet 43 and the reflective sheet 41, whereby the brightness uniformity is further improved.

In the backlight unit 40 according to this embodiment, if the color conversion sheet 44, which converts the wavelength of light, is provided between the display screen 50a (more specifically, the first prism sheet 45) and the light diffusion sheet 43, the brightness uniformity can be configured to be high compared to a case in which the color conversion sheet 44 is provided between the plurality of light sources 42 and the light diffusion sheet 43.

In the backlight unit 40 of the embodiment, the light diffusion sheet 43 may be stacked in a plurality of layers and arranged between the display screen 50a and the light sources **42.** Thus, the brightness uniformity can be further improved by the plurality of layers of the light diffusion sheet 43.

In the backlight unit 40 according to this embodiment, if a distance between the plurality of light sources 42 and the light diffusion sheet 43 (in more details, the light diffusion sheet 43 of the lowest layer) is 0 mm or more and 1 mm or less, even in a case in which a light source-to-sheet distance cannot be sufficiently secured for a decrease in thickness, deterioration of the brightness uniformity can be suppressed using the diffusion performance of the light diffusion sheet 43.

The liquid crystal display device 50 of the embodiment includes the backlight unit 40 of the embodiment and the liquid crystal display panel 5. Thus, the brightness uniformity can be improved even when the thickness or the number of stacked layers of the light diffusion sheet 43 is reduced or the like in response to a thickness reduction. A similar effect can be obtained in an information apparatus (a personal computer, a mobile phone, or the like) into which the liquid crystal display device 50 of the embodiment is built.

It should be noted that in this embodiment, a direct-type backlight unit in which the plurality of light sources 42 are arranged in a distributed manner on the back surface side of the display screen 50a of the liquid crystal display device 50 is used as the backlight unit 40. Hence, in order to reduce the size of the liquid crystal display device 50, the distance between the light sources 42 and the light diffusion sheet 43 must be reduced. However, when this distance is reduced, a phenomenon (brightness unevenness) whereby the brightness of the display screen 50a in parts located in regions between the distributed light sources 42 decreases below that of other parts is more likely to occur.

Using the light diffusion sheet 43 of this embodiment, however, is effective in suppressing brightness unevenness. More specifically, in view of future reductions in the thickness of small and medium-sized liquid crystal displays, it is thought that the effectiveness of the light diffusion sheet 43 of this embodiment will become even more pronounced by setting the distance between the light sources 42 and the light diffusion sheet 43 at 15 mm or less, preferably 10 mm or less, more preferably 5 mm or less, even more preferably 2 mm or less, and ultimately 0 mm.

### [Summary]

A light diffusion sheet according to aspect 1 of the present disclosure is a light diffusion sheet in which a plurality of recesses having an inverted polygonal pyramid shape are provided on at least one surface of a main body sheet composed of a resin, in which the main body sheet includes at least one layer, a refractive index of the layer configuring the main body sheet for light having a wavelength of 450 nm is 1.55 or more and 1.7 or less, and an absorption rate of the main body sheet for light having the wavelength of 450 nm is 7.0% or less.

According to this aspect, the plurality of recesses having an inverted substantially polygonal pyramid shape are disposed on at least one surface included in the main body sheet, and light can be caused to uniformly diffuse in accordance with the plurality of recesses. In addition, as a layer configuring the main body sheet used for forming the light diffusion sheet, the main body sheet of which a refractive index for light having a wavelength of 450 nm is 1.55 or more and 1.7 or less, and an absorption rate for light having the wavelength of 450 nm is 7.0% or less is used. For this reason, compared to a case in which a resin of which a refractive index for light having a wavelength of 450 nm is less than 1.55 or more than 1.7, and an absorption rate for light having the wavelength of 450 nm is more than 7.0% is used, the brightness uniformity can be improved.

According to a light diffusion sheet of aspect 2 of the present disclosure, in the aspect 1 described above, the refractive index of the layer configuring the main body sheet used for molding this light diffusion sheet may be 1.6 or more. According to this aspect, the brightness uniformity can be further improved.

According to the light diffusion sheet of aspect 3 of the present disclosure, in the aspect 1 or 2 described above, the main body sheet may be a single-layer or multiple-layer sheet, the at least one layer may be formed from a single resin, and the resin may be a polymer resin having an aromatic ring. According to this aspect, more appropriately, the refractive index for light having the wavelength of 450 nm can be set to 1.55 or more and 1.7 or less, and the absorption rate for light having the wavelength of 450 nm can be set to 7.0% or less.

According to the light diffusion sheet of aspect 4 of the present disclosure, in any one of the aspects 1 to 3 described above, the main body sheet may be a single-layer or multiple-layer sheet, and the at least one layer may be formed from a single resin, and the resin may be any one resin of polyester, polycarbonate (PC), polyphenylsulfone (PPSU), polyethersulfone (PESU), polysulfone (PSU), polyphenylene sulfide (PPS), polyimide (PI), and acrylic. According to this aspect, more appropriately, the refractive index for light having the wavelength of 450 nm can be set to 1.55 or more and 1.7 or less, and the absorption rate for light having the wavelength of 450 nm can be set to 7.0% or less.

According to the light diffusion sheet of aspect 5 of the present disclosure described above, in any one of the aspects 1 to 4, it is preferable that the main body sheet composed of the resin should not substantially contain a diffusing agent. According to this aspect, the manufacturing cost of the light diffusion sheet can be suppressed.

A backlight unit according to aspect 7 of the present disclosure is a backlight unit that is built into a liquid crystal display device and guides light emitted from a plurality of light sources to a display screen, the backlight unit including the light diffusion sheet according to any one of the above-described aspects 1 to 6 of the present disclosure disposed between the display screen and the plurality of light sources.

Since the backlight unit according to the present disclosure includes the light diffusion sheet according to any one of the above-described aspects 1 to 6 of the present disclosure, the brightness uniformity can be improved also for a new decrease in the thickness of the liquid crystal display device.

According to the backlight unit of aspect 8 of the present disclosure, in the aspect 7 described above, the plurality of light sources may be blue light sources. Thus, compared to a case in which white light sources are used, the manufacturing cost of the backlight unit can be reduced.

According to the backlight unit of aspect 9 of the present disclosure, in the aspect 7 or 8 described above, if the plurality of light sources are arranged in a two-dimensional matrix pattern at a pitch of 3 mm or less, the brightness uniformity can be further improved.

The backlight unit of aspect 10 of the present disclosure, in any one of the aspects 7 to 9 described above, may further include a color conversion sheet converting a wavelength of the light that is disposed between the display screen and the light diffusion sheet. According to this aspect, compared to a case in which the color conversion sheet is disposed between the plurality of light sources and the light diffusion sheet, the brightness uniformity can be improved.

According to the backlight unit of aspect 11 of the present disclosure, in any one of the aspects 7 to 10 described above, a plurality of light diffusion sheets may be disposed. According to this aspect, the brightness uniformity can be even further improved.

According to aspect 12 of the present disclosure, there is provided a liquid crystal display device including: the backlight unit according to any one of the above-described aspects 7 to 11 of the present disclosure; and a liquid crystal display panel.

Since the liquid crystal display device according to the present disclosure includes the backlight unit according to the present disclosure, described above, the brightness uniformity can be improved even when the thickness is further reduced.

According to aspect 13 of the present disclosure, there is provided an information apparatus including the liquid crystal display device according to the aspect 12 of the present disclosure.

### Examples

### (Examples and Comparative Examples)

Examples and comparative examples will be described below.

### (Fabrication of Light diffusion Sheet According to Examples 1 to 6 and Comparative Examples 1 to 6)

A light diffusion sheet 43 having a base material layer 21 that has a thickness of 120 µm was used as Examples 1 to 6 and Comparative Examples 1 to 6. In all of Examples 1 to 6 and Comparative Examples 1 to 6, a diffusing agent was not added to a base material layer 21, and a plurality of recesses 22 having an inverted substantially square pyramid shape (an inverted pyramid shape) having a depth of 50 µm and an apex angle of 90° were arranged two-dimensionally on a first surface 43a of the light diffusion sheet 43 at an arrangement pitch of 100 µm, and a second surface 43b of the light diffusion sheet 43 was formed as a matte surface of which the arithmetic mean roughness Ra is 1.8 µm.

A method of manufacturing light diffusion sheets 43 according to Examples 1 to 6 and Comparative Examples 1 to 6 is as below. First, a pellet-shaped base material resin (plastic resin) was formed into a resin film using an extruder. Thereafter, by using a roll of which the surface has a convex pyramid shape as one of two metal rolls and an embossed roll having a random matte shape as the other roll, these two rolls were pressed (heat pressed) against the resin film to fabricate the layer light diffusion sheet 43 of the single layer having recesses 22 having the inverted pyramid shape disposed on the first surface 43a and a matte surface on the second surface 43b.

In Comparative Example 1, as a resin composing the light diffusion sheet 43, polymethylpentene of which the refractive index and the absorption rate for light having the wavelength of 450 nm are respectively 1.44 and 3.4% was used. In Comparative Example 2, as a resin composing the light diffusion sheet 43, special polycarbonate of which the refractive index and the absorption rate for light having the wavelength of 450 nm are respectively 1.48 and 3.9% was used. In Comparative Example 3, as a resin composing the light diffusion sheet 43, special polycarbonate of which the refractive index and the absorption rate for light having the wavelength of 450 nm are respectively 1.49 and 3.8% was used. In Comparative Example 4, as a resin composing the light diffusion sheet 43, cyclic olefins of which the refractive index and the absorption rate for light having the wavelength of 450 nm are respectively 1.50 and 4.0% was used. In Comparative Example 5, as a resin composing the light diffusion sheet 43, special polycarbonate of which the refractive index and the absorption rate for light having the wavelength of 450 nm are respectively 1.64 and 7.7% were used.

In Example 1, as a resin composing the light diffusion sheet 43, polycarbonate of which the refractive index and the absorption rate for light having the wavelength of 450 nm are respectively 1.58 and 4.9% was used. In Example 2, as a resin composing the light diffusion sheet 43, polycarbonate of which the refractive index and the absorption rate for light having the wavelength of 450 nm are respectively 1.59 and 4.8% was used. In Example 3, as a resin composing the light diffusion sheet 43, polyester of which the refractive index and the absorption rate for light having the wavelength of 450 nm are respectively 1.60 and 5.4% was used. In Example 4, as a resin composing the light diffusion sheet 43, polycarbonate of which the refractive index and the absorption rate for light having the wavelength of 450 nm are respectively 1.60 and 4.8% was used. In Example 5, as a resin composing the light diffusion sheet 43, polyester of which the refractive index and the absorption rate for light having the wavelength of 450 nm are respectively 1.64 and 5.9% was used. In Example 6, as a resin composing the light diffusion sheet 43, polyester of which the refractive index and the absorption rate for light having the wavelength of 450 nm are respectively 1.67 and 6.8% was used.

### (Measurement of Refractive Index and Absorption Rate in Main Body Sheet)

The measurement of the refractive index and the absorption rate was performed by processing the resin composing the light diffusion sheet 43 into a main body sheet (film) having a thickness of 500 µm ± 100 µm. In the measurement of the absorption rate, by using an ultraviolet visible near-infrared spectrophotometer V-770 manufactured by Japan Spectroscopy (JASCO), the transmittance (spectral transmittance) and the reflectance (spectral reflectance) for light having the wavelength of 450 nm were measured, and the absorption rate was calculated as the absorption rate (%) = 100 - transmittance (%) - reflectance (%). In the measurement of the refractive index, by using a spectroscopic ellipsometer UVISEL2 manufactured by Horiba, Ltd., the amount of change in polarization of incident light and reflected light was measured for each wavelength, and an optical model was created on the basis of the acquired measurement data to perform fitting calculation, whereby the refractive index for the light having the wavelength of 450 nm was calculated.

### (Main Body Sheet Used in Examples 1 to 6 and Comparative Examples 1 to 6)

In the measurement of the refractive index and the absorption rate of resins composing the light diffusion sheets 43 according to Examples 1 to 6 and Comparative Examples 1 to 6, the resin composing each light diffusion sheets 43 was processed into a main body sheet having 500µm±100µm as described above, and the refractive index and the absorption rate were measured using this main body sheet.

Fig. 6 shows the refractive index and the absorption rate of resins composing the light diffusion sheets 43 according to Examples 1 to 6 and Comparative Examples 1 to 6 for light having the wavelength of 450 nm. In Fig. 6, Comparative Examples 1 to 5 are respectively denoted by C1 to C5, and Examples 1 to 6 are respectively denoted by E1 to E6.

### (Main Body Sheet Used in Example 7 and Comparative Examples 7 and 8)

The refractive indices of layers of main body sheets configuring light diffusion sheets 43 according to Example 7 and Comparative Examples 7 and 8 were measured similarly to Examples 1 to 6.

A main body sheet configuring each of the light diffusion sheets 43 according to Example 7 and Comparative Examples 7 and 8 was fabricated in the following order, and the absorption rate was measured using this main body sheet.

In Example 7, a main body sheet of a two-layer structure having a total thickness of 500 µm was fabricated as a base material layer 21 by stacking an Ultraviolet-curing acrylic resin having a thickness of 200 µm in which no uneven shape was formed on one surface of a polycarbonate sheet having a thickness of 300 µm.In Comparative Example 7, a base material layer 21 that is a main body sheet of a two-layer structure having a total thickness of 500 µm was fabricated by stacking an Ultraviolet-curing acrylic resin having a thickness of 200 µm in which no uneven shape was formed on one surface of a special polycarbonate sheet having a thickness of 300 µm.

In Comparative Example 8, a base material layer 21 that is a main body sheet of a two-layer structure was fabricated in the same conditions as those of Example 7 except for using special polycarbonate having a thickness of 300 µm instead of polycarbonate having the thickness of 300 µm.

Absorption rates of the main body sheets according to Example 7 and Comparative Examples 7 and 8 were measured.

### (Light diffusion Sheets According to Example 7 and Comparative Examples 7 and 8)

The light diffusion sheets 43 according to Example 7 and Comparative Examples 7 and 8 were fabricated.

In Example 7, polycarbonate having a thickness of 300 µm is used as a base material layer 21, and no diffusing agent is added to this base material layer 21. In Example 7, a two-layer light diffusion sheet 43 having a total thickness of 350 µm was fabricated by two-dimensionally arranging a plurality of recesses 22 having an inverted square pyramid shape (inverted pyramid shape) with a depth of 50 µm and an apex angle of 90° at an arrangement pitch of 100 µm using an Ultraviolet-curing acrylic resin on one surface of the base material layer 21. In Comparative Example 7, a light diffusion sheet 43 of a two-layer structure having a total thickness of 350 µm was fabricated by two-dimensionally arranging a plurality of recesses 22 having an inverted square pyramid shape (inverted pyramid shape) with a depth of 50 µm and an apex angle of 90° at an arrangement pitch of 100 µm using an Ultraviolet-curing acrylic resin on one surface of the special polycarbonate sheet having a thickness of 300 µm to which no diffusing agent was added.

In Comparative Example 8, a light diffusion sheet 43 having a two-layer structure was fabricated in the same conditions as those of Example 7 except for using special polycarbonate having a thickness of 300 µm instead of polycarbonate having a thickness of 300 µm.

### (Evaluation of Brightness Uniformity According to Examples 1 to 6 and Comparative Examples 1 to 6)

Three light diffusion sheets 43 according to the embodiments and the comparative examples described above were stacked and were arranged in the backlight units 40 shown in Figs. 2 and 3, and an evaluation of brightness uniformity was performed. In more details, in backlight configuration (i), in the backlight unit 40 shown in Fig. 2, blue LEDs were arranged in a square array at a pitch of 2.8 mm as a plurality of light sources 42, and three light diffusion sheets 43 were arranged such that the first surface 43a (a surface in which recesses 22 having an inverted pyramid shape are formed) faces a light incident surface. In backlight configuration (ii), in the backlight unit 40 shown in Fig. 3, blue LEDs are arranged in a square array at a pitch of 2.8 mm as a plurality of light sources 42, and three light diffusion sheets 43 are arranged such that the first surface 43a (a surface on which recesses 22 having an inverted pyramid shape are formed) faces a light emitting surface. In backlight configuration (iii), in the backlight unit 40 shown in Fig. 2, blue LEDs are arranged at a pitch of 3.5 mm x 4.5 mm as a plurality of light sources 42, and three light diffusion sheets 43 are arranged such that the first surface 43a (a surface on which recesses 22 having an inverted pyramid shape are formed) faces the light incident surface. In backlight configuration (iv), in the backlight unit 40 shown in Fig. 3, blue LEDs are arranged at a pitch of 3.5 mm x 4.5 mm as a plurality of light sources 42, and three light diffusion sheets 43 are arranged such that the first surface 43a (a surface on which recesses 22 having an inverted pyramid shape are formed) faces the light emitting surface.

In any backlight configuration, a QD sheet was used as a color conversion sheet 44. Further, as the prism sheets 45 and 46, sheets in which protrusion prism parts are provided using an Ultraviolet-curing acrylic resin made of acrylate on a base material layer made of a PET film were used, in the first prism sheet 45, protrusion prism parts of which the height is 12 µm and the apex angle is 94° were arranged at a pitch of 25 µm to have a total thickness of 90 µm, and in the second prism sheet 46, protrusion prism parts of which the height is 24 µm and the apex angle is 93° were arranged at the pitch of 51 µm to have a total thickness of 150 µm. In addition, as the upper light diffusion sheet 47, a sheet acquired by beads coating both surfaces of a PET base material with a thermosetting resin to have a total thickness of 135 µm was used.

The evaluation of the brightness uniformity of the light diffusion sheets 43 according to the example and the comparative example was performed as below. First, in order to suppress the lifting of the sheets in each of the backlight configurations described above, a transparent glass plate was placed on the upper light diffusion sheet 47, and by using a two-dimensional spectroradiometer SR-5000HS manufactured by Topcon Technohouse Corp., the brightness upward in the vertical direction (a direction from the light source 42 toward the glass plate) was measured. Next, a two-dimensional brightness distribution over a 40 mm square area was acquired using a brightness irregularity measurement device, and, after overall brightness balance correction is performed, the average value and the standard deviation of the brightness were calculated, and the brightness uniformity was acquired as "brightness uniformity" = "(average value of brightness)/(standard deviation of brightness)".

Fig. 7 shows results of evaluations of brightness uniformity for the light diffusion sheets according to Examples 1 to 6 and Comparative Examples 1 to 6. As shown in Fig. 7, in Examples 1 to 6 in which the refractive index for light having the wavelength of 450 nm was 1.55 or more and 1.7 or less and the absorption rate for light having the wavelength of 450 nm was 7.0% or less, the brightness uniformity was higher than that in Comparative Examples 1 to 5 in any backlight configuration. In addition, from the comparison between the evaluation results of the brightness uniformity in the backlight configurations (i) and (ii) and the evaluation results of the brightness uniformity in the backlight configurations (iii) and (iv), it was found that it is preferable that the arrangement pitch of the plurality of light sources 42 is small, and high brightness uniformity can be acquired, particularly by arranging the light sources 42 in a two-dimensional matrix form at a pitch of 3 mm or less. In addition, from the comparison between the evaluation results of the brightness uniformity in the backlight configurations (i) and (iii) and the evaluation results of the brightness uniformity in the backlight configurations (ii) and (iv), it was found that provision of the color conversion sheet 44 between the display screen 50a (more specifically, the first prism sheet 45) and the light diffusion sheet 43 (more specifically, the light diffusion sheet 43 of an uppermost layer) enables higher brightness uniformity than that of a case in which the color conversion sheet 44 is disposed between the plurality of light sources 42 and the light diffusion sheet 43 (more specifically, the light diffusion sheet 43 of a lowermost layer). In a case in which the color conversion sheet 44 is disposed between the display screen 50a and the light diffusion sheet 43, it is preferable to arrange the light diffusion sheet 43 such that the first surface 43a (the surface on which recesses 22 having an inverted pyramid shape are formed) faces the light incident surface in terms of brightness improvement, and, in a case in which the color conversion sheet 44 is disposed between the plurality of light sources 42 and the light diffusion sheet 43, it is preferable to arrange the light diffusion sheet 43 such that the first surface 43a (the surface on which recesses 22 having the inverted pyramid shape are formed) faces the light emitting surface in terms of brightness improvement.

Although it is preferable that the absorption rate of the resin composing the light diffusion sheet 43 for light having the wavelength of 450 nm should be low, as shown in Fig. 6, if the refractive index is to be increased, the absorption rate tends to increase as well, and, in the resin of which the refractive index for light having the wavelength of 450 nm is 1.55 or more, the absorption rate depending on the thickness frequently became 4.5% or more. Further, although it is preferable that the refractive index of the resin composing the light diffusion sheet 43 for light having the wavelength of 450 nm should be high, if the amount of addition of sulfur or aromatic rings is increased to increase the refractive index, the resin tends to become hard and fragile, and, particularly in the case of the resin of which the refractive index is more than 1.7, it was frequently difficult to mold it into a light diffusion sheet.

### (Evaluation of Brightness Uniformity of Example 7 and Comparative Examples 7 and 8)

As shown in Figs. 10 or 11, one light diffusion sheet 43 according to Example 7 and Comparative Examples 7 and 8 was disposed in the backlight unit, and evaluation of brightness uniformity was performed. In the backlight configuration (v) of Example 7 and Comparative Example 7, similar to Examples 1 to 6, the brightness uniformity of the light diffusion sheet 43 was acquired (Fig. 10) under the same conditions as those in the backlight configuration (iii) described above except that the number of light diffusion sheets 43 (the surface on which recesses 22 having an inverted pyramid shape are formed is arranged toward the light incident surface) was changed from three to one. In addition, in the backlight configuration (vi) of Example 7 and Comparative Example 8, similar to Examples 1 to 6, the brightness uniformity of the light diffusion sheet 43 was acquired (Fig. 11) under the same conditions as those in the backlight configuration (iv) described above except that the number of light diffusion sheets 43 (the surface on which recesses 22 having an inverted pyramid shape are formed is arranged toward the light emission surface) was changed from three to one. Note that, the backlight configurations (v) and (vi) have the number light diffusion sheets to be one and thus form evaluation conditions in which it is more difficult to improve the brightness uniformity than in the backlight configurations (iii) and (iv).

Figs. 8 and 9 show refractive indices and absorption rates of main body sheets configuring the light diffusion sheets 43 according to Example 7 and Comparative Examples 7 and 8 for light having the wavelength of 450 nm and results of evaluations of the brightness uniformity of the light diffusion sheets.

As shown in Fig. 9, when the light diffusion sheet according to Example 7 is compared to that according to Comparative Example 8 in which the refractive index of one layer out of two layers of light diffusion sheets is lower than 1.55, in the backlight configuration (vi) using only one light diffusion sheet, the brightness uniformity of Example 7 was higher than that of Comparative Example 8.

Further, as shown in Fig. 8, when the light diffusion sheet according to Example 7 is compared to that according to Comparative Example 7 in which the refractive indices of all the layers out of two layers of light diffusion sheets are lower than 1.55, in the backlight configuration (v) using only one light diffusion sheet, the brightness uniformity of Example 7 was higher than that of Comparative Example 7. Furthermore, the difference in brightness uniformity between Example 7 and Comparative Example 7 had a tendency to be higher than a difference in brightness uniformity between Example 7 and Comparative Example 8**.**

### (Other Embodiments)

While embodiments (including examples; hereinafter the same) of the present disclosure have been described above, the present disclosure is not solely limited to the embodiments described above, and various modifications can be made within the scope of the disclosure. In other words, the foregoing description of the embodiment is merely illustrative in nature and is not intended to limit the present disclosure, its applications, or its uses.

### Reference Signs List

- 1: TFT substrate
- 2: CF substrate
- 3: Liquid crystal layer
- 5: Liquid crystal display panel
- 6: First polarizing plate
- 7: Second polarizing plate
- 21: Base material layer (main body sheet)
- 22: Recess
- 23: Ridgeline
- 40: Backlight unit
- 41: Reflective sheet
- 42: Light source
- 43: Light diffusion sheet
- 43a: First surface
- 43b: Second surface
- 44: Color conversion sheet
- 45: First prism sheet
- 46: Second prism sheet
- 47: Upper light diffusion sheet
- 50: Liquid crystal display device
- 50a: Display screen

## Claims

1. A light diffusion sheet in which a plurality of recesses having an inverted polygonal pyramid shape are provided on at least one surface of a main body sheet composed of a resin,
wherein the main body sheet includes at least one layer,
wherein a refractive index of a layer configuring the main body sheet for light having a wavelength of 450 nm is 1.55 or more and 1.7 or less, and
wherein an absorption rate of the main body sheet for light having the wavelength of 450 nm is 7.0% or less.

2. The light diffusion sheet according to claim 1, wherein the refractive index is 1.6 or more.

3. The light diffusion sheet according to claim 1 or 2,
wherein the main body sheet is a single-layer or multiple-layer sheet, and the at least one layer is formed from a single resin, and
wherein the resin is a polymer resin having an aromatic ring.

4. The light diffusion sheet according to any one of claims 1 to 3,
wherein the main body sheet is a single-layer or multiple-layer sheet, and the at least one layer is formed from a single resin, and
wherein the resin is any one resin of polyester, polycarbonate (PC), polyphenylsulfone (PPSU), polyethersulfone (PESU), polysulfone (PSU), polyphenylene sulfide (PPS), polyimide (PI), and acrylic.

5. The light diffusion sheet according to any one of claims 1 to 4, wherein the main body sheet composed of the resin does not substantially contain a diffusing agent.

6. The light diffusion sheet according to any one of claims 1 to 5, wherein the plurality of recesses are formed in an inverted substantially square pyramid shape and are arranged in a two-dimensional matrix pattern.

7. A backlight unit that is built into a liquid crystal display device and guides light emitted from a plurality of light sources to a display screen, the backlight unit comprising the light diffusion sheet according to any one of claims 1 to 6 disposed between the display screen and the plurality of light sources.

8. The backlight unit according to claim 7, wherein the plurality of light sources are blue light sources.

9. The backlight unit according to claim 7 or 8, wherein the plurality of light sources are arranged in a two-dimensional matrix pattern at a pitch of 3 mm or less.

10. The backlight unit according to any one of claims 7 to 9, further comprising a color conversion sheet converting a wavelength of the light that is disposed between the display screen and the light diffusion sheet.

11. The backlight unit according to any one of claims 7 to 10, wherein a plurality of light diffusion sheets are disposed.

12. A liquid crystal display device comprising:
the backlight unit according to claim 7; and
a liquid crystal display panel.

13. An information apparatus comprising the liquid crystal display device according to claim 12.
